Europäisches Patentamt

European Patent Office

Office européen des brevets

(11) Numéro de publication: **0 379 827**
**A1**

## (12) DEMANDE DE BREVET EUROPEEN

(21) Numéro de dépôt: **89450015.6**

(22) Date de dépôt: **28.11.89**

(51) Int. Cl.⁵: **F16C 29/06**

(30) Priorité: **25.01.89 FR 8901092**

(43) Date de publication de la demande:
**01.08.90 Bulletin 90/31**

(84) Etats contractants désignés:
**AT BE CH DE ES FR GB IT LI LU NL SE**

(71) Demandeur: **Lecomte, Marc**
**9, rue Plaisance**
**F-33700 Merignac(FR)**

(72) Inventeur: **Lecomte, Marc**
**9, rue Plaisance**
**F-33700 Merignac(FR)**

(74) Mandataire: **Trolliet, Jean-Claude**
**Cabinet BURDIPAT 20, cours du Chapeau**
**Rouge**
**F-33000 Bordeaux(FR)**

(54) **Guide linéaire de précision.**

(57) L'invention concerne un guide linéaire de précision comportant un rail de guidage (1) ayant un profil extérieur de forme prismatique inscrit dans un cercle et présentant trois arcs (3, 4), les arcs (4) étant égaux et leurs extrémités consécutives (5) sont reliées par un côté plan (6), les quatre autres extrémités (8) des arcs étant reliées par deux côtés (9) en creux comportant chacun des raccordements extérieurs (10) en forme de gorges circulaires servant aprés rectification de chemin de roulement à des jeux de billes mobiles (19, 19a) maintenues sur les ailes (17) du patin (14) enserrant le rail (1) en appui sur les gorges (18, 23), les jeux de billes (19, 19a) étant maintenues au moyen d'une cage inférieure (25) et d'une languette (32), ladite cage (25) est dotée de rainures (29) permettant le recyclage des billes (19) durant le déplacement du patin (14) et ledit patin (14) d'un alésage (24) pour le recyclage des billes (19a), la liaison des rainures (18, 21), rainures (23) et alésage (24) étant réalisée par des rainures circulaires aménagées en extrémité de la cage (25) et sur les pièces d'extrémités.

Fig. 4

## Guide linéaire de précision

La présente invention est relative à un guide linéaire de précision du type comportant un rail et un patin à billes.

On connaît les guides linéaires de précision constitués d'au moins un rail de section circulaire et d'une douille coulissante munie de circuits de billes internes facilitant la translation de ladite douille, ce type de guides permet des grands et petits déplacements, dans le cas de petits déplacements le rail est fixé sur des supports en ses extrémités et la douille est fermée, dans le cas de grands déplacements nécessitant l'aboutement de plusieurs rails et la fixation intermédiaire desdits rails par un ou plusieurs supports, la douille est ouverte pour permettre le passage du ou des supports, bien que l'aboutement des tronçons de rail soit aisé puisque de section circulaire permettant de réaliser des alésages en extrémité parfaitement concentriques destinés à recevoir les pions d'assemblage, le guide est limité en charge dû au contact ponctuel des billes avec le rail, d'autre part la section circulaire du rail n'assure pas de retenue en rotation ce qui nécessite afin de pallier à cet inconvénient l'utilisation d'un second rail parallèle et pour les douilles ouvertes la capacité de charge est limitée étant donné leur élasticité.

On connaît aussi les guides présentant une douille à billes coulissant sur un rail triangulaire dont chaque sommet est aménagé de part et d'autre de gorges sur lesquelles portent les billes de la douille, ce type de guides permet de supporter des charges plus importantes que ceux précédemment décrits compte tenu que les billes portent dans les gorges et permettent la transmission de couples et de ce fait obtenir un mouvement combiné translation/rotation, toutefois les déplacements sont limités à de petites longueurs étant donné que le rail ne peut être fixé qu'en ses extrémités.

Il est aussi connu les guides linéaires constitués de rails à section prismatique dotés d'au moins une gorge sur chacune de leurs faces latérales servant de chemin de roulement à des billes mobiles maintenues dans les gorges se profilant aménagées de part et d'autre des machoires internes du patin et dont leur mouvement sans fin est obtenu par un couloir de retour aménagé dans lesdites machoires, tel que décrit dans les brevets FR 2 546 995, 2 516 612, 2 545 557, 730 922, 2302 446, ce type de guides présente des avantages certains notamment au niveau du contact des billes dans les gorges ce qui permet d'augmenter la capacité de charge, leur faible encombrement et leur grande rigidité compte tenu de la fixation directe du rail sur le bâti, la disposition des billes sur les faces latérales du rail permet de supporter des couples transversaux. Ce type de guides présente certains inconvénients, il nécessite des opérations de rectifications importantes, pour sa fixation sur le bâti notamment celles de deux faces de référence à 90° tant pour le rail que pour celles du bâti-support recevant le rail, d'autre part pour réaliser des guidages de grandes longueurs nécessitant l'aboutement de plusieurs rails, cette opération est délicate pour obtenir l'alignement parfait desdits rails car il est quasiment impossible comme pour les rails de section triangulaire de réaliser des alésages cylindriques en extrémité de manière concentrique permettant de recevoir des pions d'assemblage, comme il est aussi impossible de combiner les deux mouvements translation et rotation.

Dans tous les cas des guides linéaires précédemment décrits, les patins ou douilles sont composés d'un très grand nombre d'éléments de réalisation complexe grévant le prix de revient.

L'invention a pour but de pallier aux inconvénients précédemment exposés.

L'invention a pour objet un guide linéaire de précision comportant au moins un rail de guidage de forme prismatique et un patin coulissant muni de billes mobiles maintenues en appui sur des gorges et rainures servant de chemin de roulement caractérisé en ce que le rail de guidage de section creuse ou pleine est inscrit dans un cercle et présente au moins trois portions circulaires de même rayon et centre réparties de manière à recevoir l'appui des machoires d'immobilisation de machines-outils d'usinage ou rectification permettant de déterminer avec précision l'axe du rail et réaliser l'usinage des extrémités pour l'aboutement précis de rails entre eux par pions par exemple, les portions circulaires présentent des arcs égaux ou inégaux répartis de manière symétrique ou dissymétrique, deux des arcs consécutifs sont reliés par leurs extrémités consécutives par un côté plan destiné à être rectifié et à reposer sur un bâti, en son centre est réalisé ou non une rainure qui aprés rectification reçoit des segments de clavette pour centrer le rail et régler sa rectitude sur le bâti, les autres extrémités des deux arcs sont reliées avec les extrémités opposées d'un ou de deux arcs supérieurs par deux côtés plans en creux parallèles symétriques ou dissymétriques comportant chacun des raccordements extrêmes en forme de gorges circulaires servant aprés rectification de chemin de roulement à des billes mobiles maintenues sur les ailes d'un patin enserrant le rail dans les gorges ou rainures circulaires aménagées sur lesdites ailes notamment une rainure en chaque extrémité interne inférieure et une rainure intermédiaire sur chacune des faces intérieures desdites ailes, chaque chemin de roulement du patin étant prolongé et relié à un conduit aménagé dans la matière constituant le corps du patin de sorte à permettre le recyclage permanent des billes durant le déplacement de ce dernier, notamment une rainure sur la face inférieure de chaque aile pour les billes des chemins de roulement inférieurs et au travers d'un alésage pratiqué dans les ailes pour les billes des chemins de roulement intermédiaires, le prolongement des chemins de roulement permettant le raccordement avec les conduits de recyclage des billes étant réalisé au moyen d'une rainure ou gorge circulaire aménagée dans une cage monobloc inférieure et dans les pièces d'extrémités du patin, les billes sur les chemins de roulement du patin étant maintenues au moyen des cages inférieures et languettes solidaires desdites cages, au moyen des cages et fils d'acier ou au moyen des cages inférieures et d'un élément formé métallique ou en matière synthétique.

D'autres caractéristiques et avantages de l'invention ressortiront plus clairement de la description qui va suivre faite en regard des dessins joints donnés à titre d'exemple non limitatif, où :

- la figure 1 est une vue en coupe d'un rail de guidage brut avant rectification,
- la figure 2, une vue en perspective d'un rail de guidage après rectification et usinage de ses extrémités,
- la figure 3, une vue en perspective d'un rail et d'un patin,
- la figure 4, une vue en coupe d'un rail de guidage et d'un patin,
- les figures 5, 6 et 7, une vue en coupe d'un rail de guidage et de patins présentant différents modes de maintien des billes dans les chemins de roulement,
- la figure 8, une vue en perspective et en coupe de la cage inférieure monobloc permettant le maintien et le recyclage des billes dans les chemins de roulement pour la réalisation de la figure 4,
- la figure 9, une vue en perspective de la cage inférieure monobloc permettant le maintien et le recyclage des billes des réalisations représentées figures 5, 6 et 7,
- la figure 10, les pièces communes en perspective des extrémités de chaque patin,
- les figures 11, 12 et 13, des variantes de réalisations de rails,
- les figures 14 et 15, une vue de dessus d'une variante de réalisation des extrémités des cages monoblocs représentées figures 8 et 9 ainsi que les extrémités communes des patins,
- la figure 16, une vue en perspective de la variante représentée figure 14.

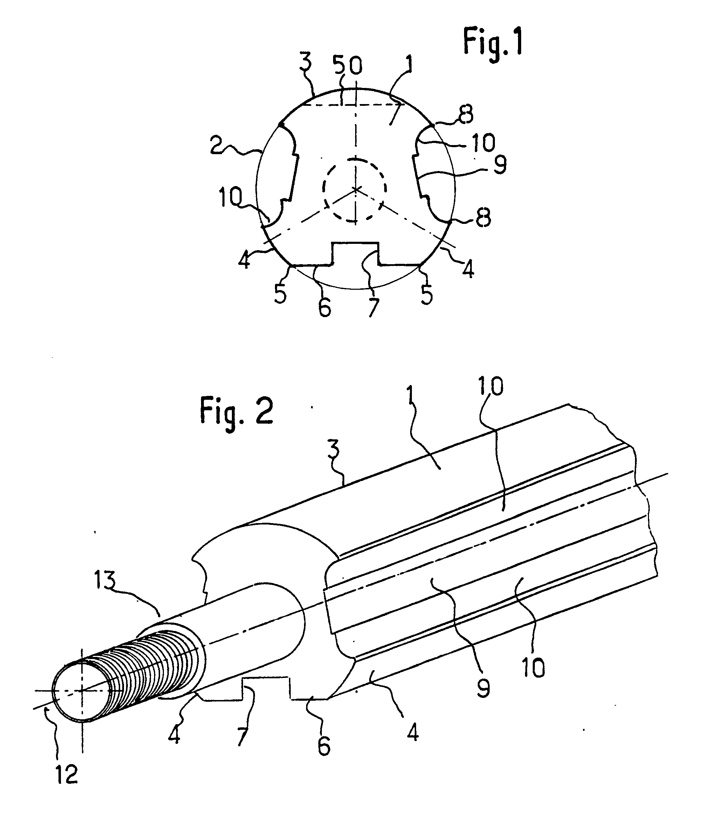

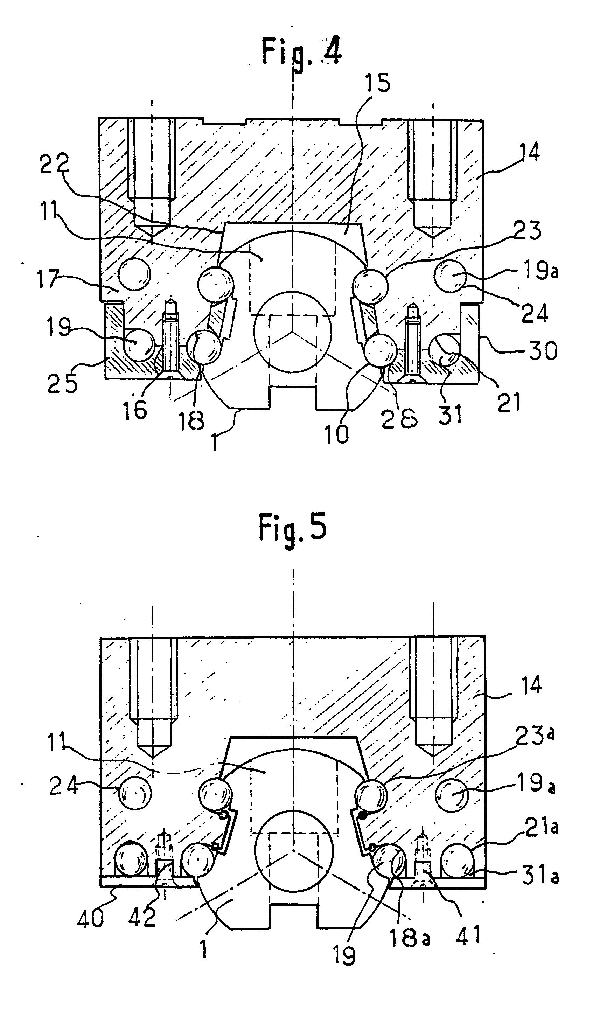

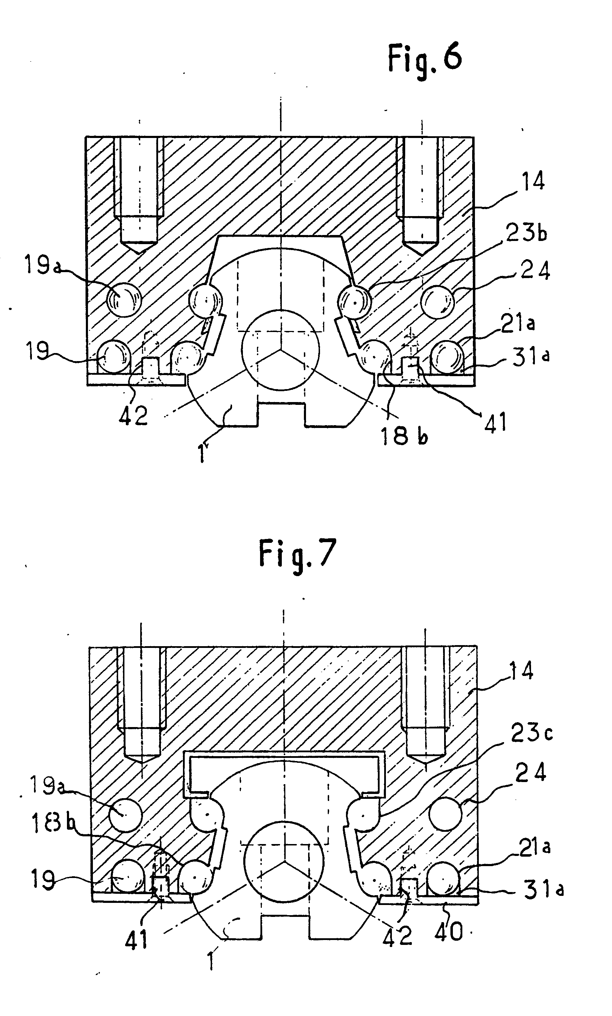

Tel que représenté figures 1 et 2, le rail 1 du guide linéaire à l'état brut a une section pleine ou creuse ayant un profil extérieur de forme prismatique inscrite dans un cercle 2 présentant trois portions circulaires 3 et 4 de même rayon et centre réparties de façon à recevoir l'appui des machoires d'immobilisation des machines-outils d'usinage ou rectification permettant notamment de déterminer avec précision l'axe 12 du rail 1 et ce fait réaliser un usinage ou alésage d'extrémités recevant un pion 13 d'aboutement de deux rails 1 par exemple, les portions circulaires 4 présentent des arcs égaux tandis que la portion 3 présente un arc plus important, les extrémités 5 consécutives des arcs 4 sont reliées entre elles au moyen d'une face plane 6 présentant ou non en son centre une rainure 7, la face 6 après rectification étant destinée à reposer sur un bâti non représenté et la rainure 7 après rectification reçoit des segments de clavette non représentés permettant le centrage du rail 1 sur le bâti tout en permettant le réglage de sa rectitude, les extrémités 8 des arcs égaux 4 et inégal 3 sont reliées par deux côtés plans 9 symétriques en biais et en creux dont les extrémités de raccordement présentent chacune une gorge circulaire 10 qui après rectification sont destinées à servir de chemin de roulement aux billes mobiles maintenues sur les patins, le rail 1 une fois rectifié et mis en place sur le bâti est immobilisé de manière connue au moyen de vis non représentées réparties sur sa longueur au travers d'évidements 11 représentés sur les figures 4 à 7. Sans sortir du cadre de l'invention la rainure 7 peut rester à l'état brut, le réglage de la rectitude du rail étant réalisé par des pions s'insérant au travers d'alésages non représentés répartis sur la longueur du rail et sur le bâti, dans ce cas il est possible d'avoir un rail non pourvu de la rainure 7.

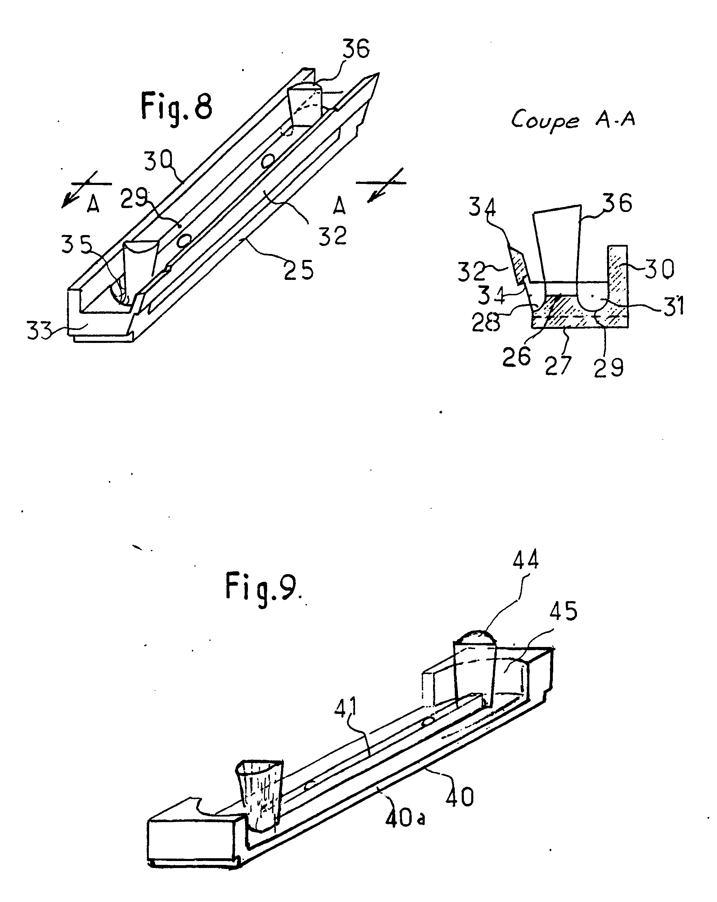

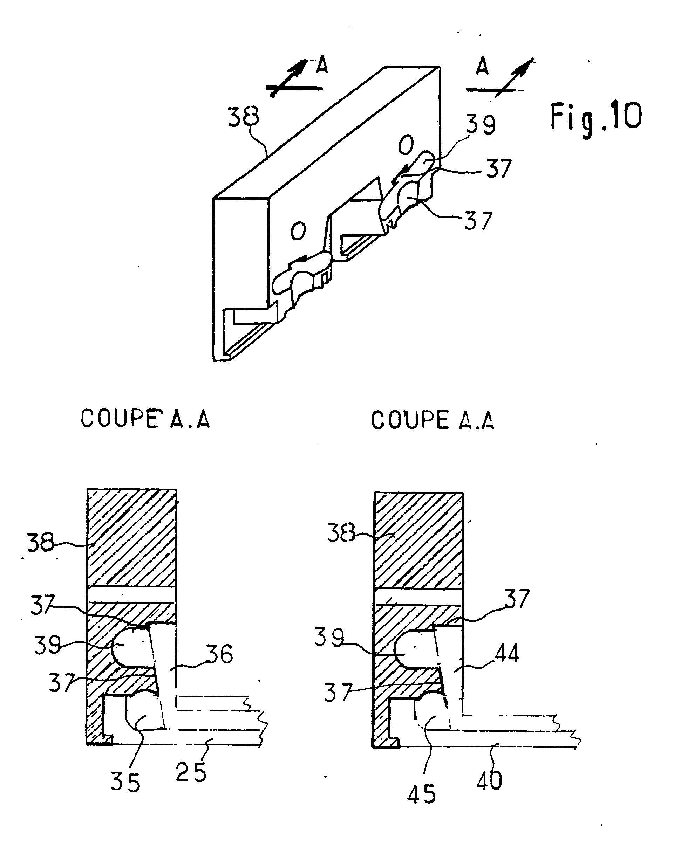

Selon les figures 3 et 4, sur le rail 1 coulisse un patin 14 en acier présentant une rainure centrale 15 de section légérement supérieure à celle du rail 1 afin de contenir ce dernier, en extrémité interne inférieure 16 de chaque aile 17 est aménagée une rainure circulaire 18 recevant, maintenant et servant de chemin de roulement à un premier jeu de billes 19 prenant appui sur lesdites rainures 18 et gorges 10 du rail 1, en extrémité inférieure 20 des ailes 17 est aménagée une rainure circulaire 21 permettant la circulation et le recyclage desdites billes19 lors u déplacement du patin 14 sur le rail 1, intermédiairement entre l'extrémité inférieure 16 de chaque aile 17 et supérieure interne 22 une rainure circulaire 23 est aménagée pour recevoir, maintenir et servir de chemin de roulement un second jeu de billes 19a prenant appui sur les rainures 23 et 10 du rail 1, de manière à permettre la circulation et le recyclage des billes 19a lors du déplacement du patin 14 un alésage 24 est réalisé dans la matière constituant le patin 14, afin de maintenir les billes 19 et 19a dans les rainures 18 et 23 en partie inférieure des ailes 17 une cage monobloc 25 représentée figure 8 en matière moulable est rapportée et fixée sous chacune des extrémités inférieures 16 des ailes 17, sur la partie supérieure 26 du socle 27 est aménagée une rainure circulaire extérieure 28 et intérieure 29, la rainure 28 maintenant le jeu de billes en appui sur la rainure 18 tout en complétant ladite rainure, la rainure 29 étant destinée à compléter la rainure 21 en constituant avec le talon 30 le couloir 31 de recyclage du premier jeu de billes 19, le maintien des deux jeux de billes 19 et 19a sur chaque aile 17 étant obtenu par une languette latérale 32 solidaire des extrémités 33 de la cage monobloc 25, la position de la languette 32 est telle qu'elle engendre le maintien des billes 19 et 19a dans les rainures 18, 23, 28, tout en ménageant une ouverture pour le passage d'une portion de billes 19, 19a, afin que ces dernières prennent appui sur les chemins de roulement 10 du rail 1, ladite languette 32 présente des faces transversales horizontales 34 en biais planes ou concaves de manière à se conformer au profil des jeux de billes 19 et 19a, aux extrémités 33 de la cage monobloc 25 les couloirs 31 et rainures 28 sont raccordés au moyen d'une rainure circulaire 35, l'arrondi interne 36 facilitant la circulation des billes 19 et 19a est prolongé jusqu'au niveau supérieur du second jeu de billes 19a et s'encastre lors du montage du patin 14 dans les évidements 37 aménagés à cet effet dans les pièces d'extrémités 38 représentées figure 10 et dans la rainure circulaire 39 engendrant le couloir de liaison entre l'alésage 24 et la rainure 23, il va de soi que les pièces d'extrémités 38 et les joints d'étanchéité non représentés sont assemblés de manière connue, par vis notamment.

Selon les variantes figures 5 à 7 représentant des modes de maintien des jeux de billes 19 et 19a et les usinages s'y rapportant, le jeu de billes 19 inférieur d'une aile 17 de patin est maintenu au moyen de la cage monobloc 40 représentée figure 9, cette dernière est dotée en son centre d'une languette 41 s'insérant dans la rainure 42 aménagée sous l'extrémité inférieure de l'aile 17, aux extrémités 43 de la languette 41 un prolongement vertical 44 arrondi est aménagé permettant comme précédemment décrit de faciliter la circulation des billes 19 et 19a dans les rainures circulaires 45 aménagées aux extrémités de la cage monobloc 40 reliant les rainures 18a, 18b, avec le couloir 31a dont la face ouverte est obturée par le socle 40a et la rainure 39 des pièces d'extrémités 38 reliant les rainures 23a, 23b, 23c, avec les alésages 24, le prolon gement vertical 44 arrondi s'encastrant dans la rainure 39 et les évidements 37 aménagés sur les pièces d'extrémités 38. Il va de soi que les pièces d'extrémités 38 sont adaptées pour permettre l'encastrement des extrémités des cages monoblocs 25 et 40.

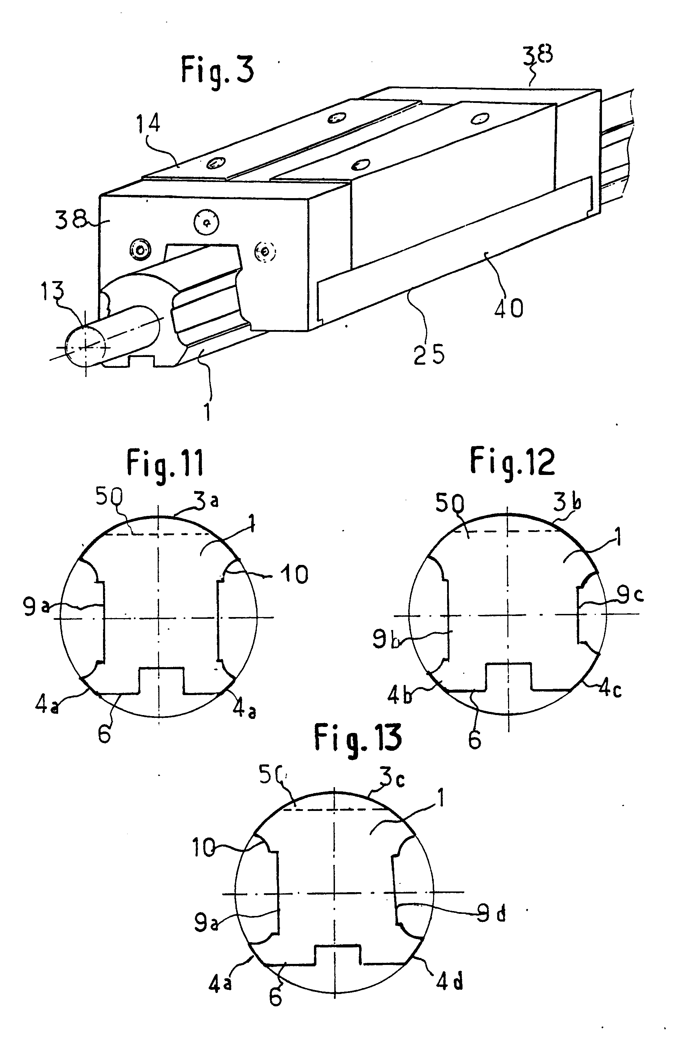

Selon les figures 11 à 13, les côtés plans en creux 9a parallèles peuvent par rapport au côté plan 6 être aménagés de manière perpendiculaire et symétrique représentée figure 11 et présenter des arcs symétriques 4a, les extrémités de l'arc supérieur 3a étant symétriques entre elles, selon la variante représentée figure 12 les côtés plans en creux 9b et 9c présentent des dimensions différentes entre gorges 10, de ce fait les arcs 4b et 4c inférieurs sont inégaux tandis que l'arc supérieur 3b est dissymétrique, de même que comme représenté figure 13 il est possible de réaliser un rail 1 présentant un côté plan en creux 9a perpendiculaire au côté plan 6 et un côté creux 9d en biais, les arcs 4a, 4d étant inégaux et l'arc 3c ses extrémités dissymétriques. Pour tous les rails 1 représentés figures 1, 11, 12 et 13, il est possible comme représenté en pointillés de concevoir de manière à réduire la hauteur de la rainure centrale 15 des patins, un côté plan 50 parallèle au côté 6, ladite réalisation engendrant en partie supérieure deux arcs symétriques et égaux ou dissymétriques et ce selon les cas de réalisations préalablement décrites, d'autre part il va de sol que selon la configuration des rails, les patins et leurs gorges sont adaptés auxdits profils réalisés. Sans sortir du cadre de l'invention la face supérieure du patin 14 et de la rainure 15 peuvent présenter une surface plane ou circulaire.

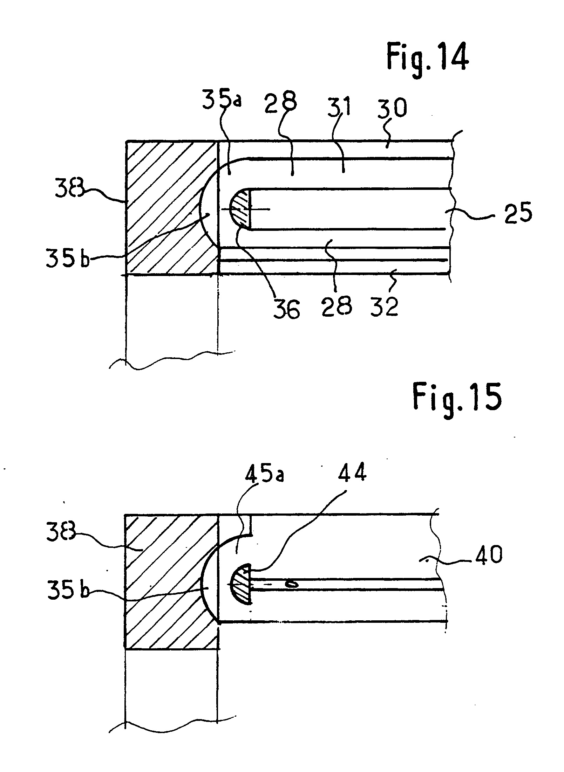

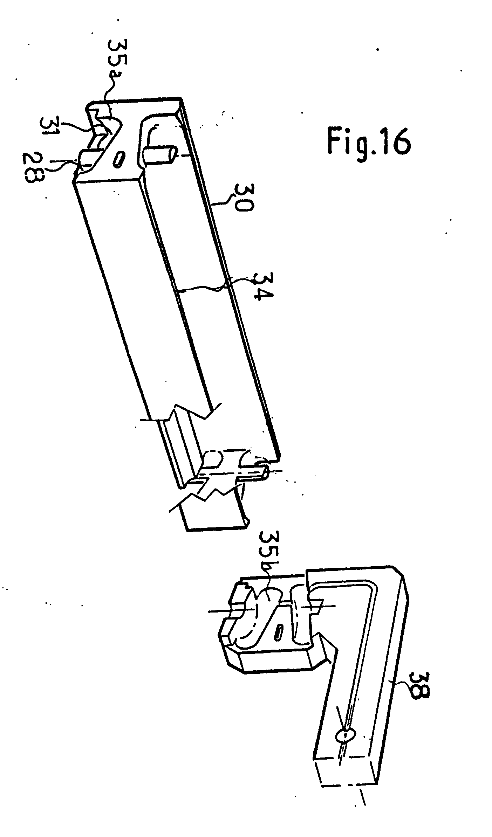

Selon les variantes des figures 14, 15 et 16, en extrémité 33 de la cage monobloc 25 les couloirs 31 et rainures 28 sont raccordés au moyen d'une rainure circulaire 35a partielle, le complément 35b étant aménagé dans les pièces d'extrémités 38 de même que pour la cage monobloc 40, la rainure 45a est partielle, son complément 35b étant aménagé comme précédemment décrit dans les pièces d'extrémités 38.

## Revendications

1°) Guide linéaire de précision comportant au moins un rail de guidage de forme prismatique et un patin coulissant muni de billes mobiles maintenues en appui sur des gorges et rainures servant de chemin de roulement caractérisé en ce que le rail de guidage (1) de section pleine ou creuse de forme prismatique est inscrit dans un cercle (2) et présente au moins trois portions circulaires ou arcs (3, 4) égaux ou inégaux répartis sur le pourtour de même rayon et centre permettant l'appui de machoires de machines-outils d'usinage ou rectification, les extrémités consécutives (5) des arcs (4) étant reliées par un côté plan (6) destiné après rectification à reposer sur un bâti, les extrémités opposées (8) des arcs (4) et de l'arc (3) sont reliées par deux côtés plans (9) en creux comportant chacun des raccordements extrêmes en forme de gorges circulaires (10) servant après rectification de chemin de roulement à des jeux de billes mobiles (19, 19a) maintenues sur un patin (14) présentant une rainure centrale (15) contenant le rail (1), les billes (19) étant en appui dans une rainure circulaire (18) aménagée en partie interne inférieure (16) de chacune des ailes (17) et les billes (19a) dans une rainure circulaire (23) entre l'extrémité inférieure (16) et supérieure interne (22) de chaque aile (17), les rainures ou chemin de roulement (18, 23) étant reliées à des conduits (21, 24) permettant le recyclage permanent des billes (19, 19a) lors du déplacement du patin (14), le conduit (21) étant une rainure circulaire aménagée en extrémité inférieure (16) des ailes (17) pour les billes (19) et un alésage (24) pratiqué dans chacune des ailes (17) pour les billes (19a), le raccordement des chemins de roulement (18, 23) avec les conduits (21, 24) étant obtenu par une rainure circulaire (35) pour les billes (19) et (39) pour les billes (19a), lesdites rainures étant aménagées sur les pièces d'extrémités (38) du patin (14), les billes (19, 19a) étant maintenues sur les chemins de roulement (18, 23) au moyen d'une cage inférieure monobloc (25) se solidarisant sous chacune des ailes (17) du patin (14).

2°) Guide linéaire de précision selon la revendication 1 caractérisé en ce qu'au centre du côté plan (6) reliant les extrémités (5) consécutives des arcs (4) est aménagée ou non une rainure (7) destinée à recevoir des segments de clavette pour le centrage et le réglage de la rectitude du rail (1) sur le bâti.

3°) Guide linéaire de précision selon la revendication 1 caractérisé en ce que les côtés plans en creux (9) reliant les arcs (4) à l'arc (3) sont aménagés de manière symétrique en biais, les côtés (9a) parallèles et symétriques reliant les arcs (4a) à l'arc (3a) sont aménagés de manière perpendiculaire au côté (6), les côtés (9b, 9c) parallèles et perpendiculaires au côté (6) sont de dimensions différentes entre les gorges (10), les arcs (4b, 4c) étant inégaux et les extrémités de l'arc (3b) dissymétriques, le côté (9a) perpendiculaire aux côtés (6), (9d) en biais, les arcs (4d, 4c) étant inégaux et l'arc (36) ses extrémités dissymétriques.

4°) Guide linéaire de précision selon la revendication 1 caractérisé en ce qu'en partie supérieure du rail (1) est aménagé un côté plan (50) parallèle au côté (6) engendrant des arcs symétriques égaux ou dissymétriques et inégaux.

5°) Guide linéaire de précision selon la revendication 1 caractérisé en ce que chaque cage monobloc (25) fixée en partie inférieure (16) des ailes (17) du patin (14) présente en la partie supérieure (26) du socle (27) une rainure circulaire extérieure (28) et intérieure (29), la rainure (28) ayant pour rôle de compléter la rainure (18) du patin pour le jeu de billes inférieur (19) et la rainure (29) complète la rainure (21) afin de constituer avec le talon (30) le couloir (31) de recyclage du jeu de billes (19), les jeux de billes (19) inférieur et (19a) intermédiaire étant maintenus dans les rainures (18, 28, 23) au moyen d'une languette latérale (32) solidaire des extrémités (33) de la cage monobloc (25) dont les faces latérales horizontales (34) sont en biais, planes ou concaves de manière à se conformer au profil des jeux de billes (19, 19a) tout en ménageant une ouverture pour le passage d'une portion de billes (19, 19a) et leur appui sur les chemins de roulement (10) du rail (1).

6°) Guide linéaire de précision selon les revendications 1 et 2 caractérisé en ce que le couloir (31) et les rainures (18, 28) sont raccordés par des rainures circulaires (35) aménagées en extrémité des cages (25) et dont un arrondi interne (36) facilite la circulation des billes (19, 19a), ledit arrondi étant prolongé jusqu'au niveau supérieur du second jeu de billes (19a) et s'encastre dans les évidements (37) aménagé sur chaque pièce d'extrémité (38) et dans une rainure circulaire (39) engendrant le couloir de liaison entre l'alésage (24) et la rainure (23).

7°) Guide linéaire de précision selon la revendication 1 caractérisé en ce que selon le mode de maintien du jeu intermédiaire de billes (19a) dans les rainures (23a) par fils d'acier, (23b) par languettes, (23c) par éléments formés, une cage monobloc inférieure (40) maintient le jeu de billes (19) en partie inférieure de chaque aile (17) dans les rainures (18a, 18b) ainsi que dans le couloir (31a) que le socle (40a) obture, ladite cage monobloc (40) étant dotée d'une languette centrale (41) s'insérant dans la rainure (42) aménagée sur l'extrémité inférieure de chaque aile (17) aux extrémités de la cage monobloc (40) sont aménagées des rainures circulaires (45) reliant les rainures (18a, 18b) avec les couloirs (31a) permettant la circulation des billes (19), afin de faciliter leur circulation un arrondi intérieur est aménagé aux extrémités de la languette (41), ledit arrondi se prolongeant verticalement jusqu'à l'aplomb de la rainure circulaire (39) aménagée dans les pièces d'extrémités (38) s'encastrant dans lesdites rainures (39) et dans les évidements (37) facilitant la circulation du jeu de billes (19a).

8°) Guide linéaire de précision selon la revendication 1 caractérisé en ce que le rail (1) doté ou non d'une rainure (7) restant à l'état brut sur sa face inférieure plane (6) est centré et réglé en rectitude sur le bâti au moyen de pions s'insérant dans des alésages répartis sur la longueur du rail (1) et sur le bâti.

9°) Guide linéaire de précision selon la revendication 1 caractérisé en ce que la face supérieure du patin (14) et de la rainure (15) peuvent présenter une surface plane ou circulaire.

10°) Guide linéaire de précision selon la revendication 6 caractérisé en ce que le couloir (31) et rainure (28) de la cage monobloc (25) sont raccordés au moyen d'une rainure circulaire (35a) partielle, le complément (35b) étant aménagé dans la paroi d'extrémité (38).

11°) Guide linéaire de précision selon la revendication 7 caractérisé en ce que le couloir (31a) et la rainure (18a) en leurs extrémités par la cage monobloc (40) sont raccordés au moyen d'une rainure partielle (45a), son complément (35b) étant aménagé dans la paroi d'extrémité (38).

Fig.1

Fig. 2

# Fig. 4

# Fig. 5

Fig.6

Fig.7

Fig.8

36

30

29

35

A

32

25

33

Coupe A·A

34

36

32

34

30

28

31

26

27

29

Fig.9.

44

45

41

40

40a

Fig.10

COUPE A.A

COUPE A.A

## Fig. 3

## Fig. 11

## Fig. 12

## Fig. 13

Fig.14

Fig.15

Fig.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 348 231 (H. TERAMACHI)<br>* revendications 1-8; figure 2 *<br>--- | 1 | F 16 C 29/06 |
| A | FR-A-2 557 653 (H. TERAMACHI)<br>* page 11, ligne 12 - page 13, ligne 23; figures 12-14 *<br>--- | 1 | |
| A | FR-A-2 525 301 (NIPPON SEIKO K.K.)<br>--- | | |
| A | FR-A-2 570 777 (H. TERAMACHI)<br>----- | | |

**DOMAINES TECHNIQUES RECHERCHES (Int. Cl.5)**

F 16 C

Le présent rapport a été établi pour toutes les revendications

| Lieu de la recherche | Date d'achèvement de la recherche | Examinateur |
|---|---|---|
| BERLIN | 23-01-1990 | HOFFMANN M.P. |